# EUROPEAN PATENT APPLICATION

(11) **EP 4 733 338 A1**
(43) Date of publication of application: **29.04.2026**
(21) Application number: 24209286.4
(22) Date of filing: 28.10.2024
(51) Int. Cl.: C08G 12/32, B32B 21/06, B44C 5/04, C08L 61/28, D21H 17/51

(54) **A PROCESS FOR THE PREPARATION OF MELAMINE-FORMALDEHYDE RESIN WITH A LOW RESIDUAL MELAMINE CONTENT**

(71) Applicant: KremsChem Austria GmbH, 3500 Krems an der Donau (AT)
(72) Inventor: WAGNER, Robert, 3500 Krems an der Donau (AT)
(74) Representative: Hoyng Rokh Monegier B.V.

(57) **Abstract**

The invention relates to a process for the preparation of a melamine-formaldehyde resin composition comprising the steps of: a) Preparing a slurry of melamine in a solution of formaldehyde in water, b) adjusting pH of the slurry in a range between 8.3 and 10.5, c) Reacting the melamine and the formaldehyde in the slurry to form methylolated melamine at a first temperature between 90 and 120°C, d) when the slurry has become a water-clear solution, cooling to a second temperature between 70 and 90°C and holding at that second temperature for condensation of the methylolated melamine forming a melamine formaldehyde resin composition, e) cooling. The invention also relates to a melamine-formaldehyde resin composition obtainable by the process having a residual (free) melamine content below 3 wt.%, to curable melamine-formaldehyde resin composition comprising the melamine-formaldehyde resin composition and a catalyst and various uses thereof.

## Description

### BACKGROUND OF THE INVENTION

### Field of the Invention

The invention relates to a process for the preparation of Melamine-Formaldehyde (MF) resin and the Melamine-Formaldehyde (MF) resin obtainable by the process with a low residual Melamine content. The invention also relates to the impregnated paper, laminated substrates and wood fiber products comprising the MF resin.

### Description of the Related Art

EP1607391B2 describes a continuous process for the preparation of HexaMethylolMelamines (HMM) for the production of highly etherified Melamine resins . The main goal is the production of HMM (HexamethylolMelamine), which is etherified to (HexamethoxymethylolMelamine). The reaction is performed in an extruder, by mixing a formaldehyde solution, an alkalizing agent, and solid Melamine into a paste at a reduced temperature of 50 to 120°C, most preferably from 55 to 85°C. The paste is then vacuum dried at elevated temperature of 120°C. The patent is silent about the residual Melamine content.

JP1982158266A describes a process for the preparation of a resin composition for paint baking at high temperature which is formed by the addition of Melamine with formaldehyde in butanol in the presence of a basic catalyst followed by condensation and butyl-etherification with addition of an acid catalyst. The methylolation and etherification in the first step is done at 85-90°C, the following condensation at 130°C. The patent is silent about the residual Melamine content.

In EP1607391 B2 the production of MethylolMelamines for the manufacturing of highly etherified Melamine resins involves the production of HMM (HexamethylolMelamine). This is performed in an extruder, by mixing a formaldehyde solution, an alkalizing agent, and solid Melamine into a paste at a reduced temperature preferably from 55 to 85°C, hence the methylolation step is at low temperature. Later stages of the Process involve higher temperatures for the etherification and condensation.

However, the prior art processes do not provide MF resin having a low residual Melamine amount. Melamine is currently undergoing regulatory changes, which result in the need for lowering the amounts of free residual Melamine in MF resins. Typically, the amount of residual Melamine in MF impregnation resins is around 3.5 - 4 wt.%. However, a lower residual melamine amount, most preferably below < 1 wt.%, would be desirable, not only in view of regulatory classification, but also in view of achieving a lower waste of Melamine into wastewater.

### BRIEF SUMMARY OF THE INVENTION

According to the invention one or more of the mentioned problems are solved by the process of the invention for the preparation of a melamine-formaldehyde resin composition comprising the steps of:
a. Preparing a slurry of melamine in a solution of formaldehyde in water,
b. adjusting pH of the slurry in a range between 8.3 and 10.5,
c. Reacting the melamine and the formaldehyde in the slurry to form methylolated melamine at a first temperature between 90 and 120°C,
d. when the slurry has become a water-clear solution, cooling to a second temperature between 70 and 90°C and holding at that second temperature for condensation of the methylolated melamine forming a melamine formaldehyde resin composition,
e. cooling,
f. optionally adjusting a resin solids wt.% by evaporating water,
g. optionally adding urea in any of steps a) to d) in an amount less than 10 wt.% relative to the total amount of melamine and urea.

The process of the invention results in a lower emission of melamine in the wastewater streams. The process of the invention also produces a melamine-formaldehyde resin composition having a residual (free) melamine content below 3 wt.%, preferably below 2, more preferably below 1 wt.%, while at the same time maintaining good properties like low volatile content, good surface properties in an impregnated layer laminated on to a substrate, good crack resistance and good water resistance as exemplified in the examples described below.

Therefore, in another aspect the invention relates to a melamine-formaldehyde resin composition obtainable by the process of the invention having a residual melamine content below 3 wt.%, preferably below 2, more preferably below 1 wt.%. The residual melamine content is melamine that has not reacted with the formaldehyde and remains as unbound melamine in the obtained melamine-formaldehyde resin composition and is therefore also referred to as free melamine. The free melamine content is measured as described in the experimental section below.

In yet another aspect the invention relates to the use of the adhesive melamine-formaldehyde resin of the invention as impregnation resin for impregnating paper or as a binder for wood fiber articles.

The invention also relates to an impregnated paper layer comprising a paper layer impregnated with the adhesive melamine-formaldehyde resin of the invention that is partially cured (also called a prepreg) or a fully cured final product.

The invention also relates to a laminate comprising a substrate, preferably a wood-based substrate, and laminated thereto the fully cured impregnated paper layer and to a process for the preparation thereof.

The invention also relates to wood fiber product comprising wood fibers bonded with a binder comprising the adhesive melamine-formaldehyde resin of the invention that is fully cured.

### DETAILED DESCRIPTION OF THE INVENTION

The process for the preparation of a melamine-formaldehyde resin composition comprises the steps of:
a) Preparing a slurry of melamine in a solution of formaldehyde in water,
b) adjusting pH of the slurry in a range between 8.3 and 10.5, preferably between 9.0 and 9.7, most preferably between 9.3 and 9.5, preferably by adding NaOH solution in water,
c) Reacting the melamine and the formaldehyde in the slurry to form methylolated melamine at a first temperature between 90 and 120°C, preferably between 95 and 110°C and more preferably between 99 and 105°C and most preferably under reflux in atmospheric pressure,
d) when the slurry has become a water-clear solution, cooling to a second temperature between 70, 75, 80 and 90°C, preferably between 80 and 87°C, most preferably between 81 and 85°C and holding at that second temperature for condensation of the methylolated melamine forming a melamine formaldehyde resin composition,
e) cooling,
f) optionally adjusting a solids content in wt.%,
g) optionally adding urea in anyone of steps a) to d) in an amount less than 10, preferably less than 5 and most preferably 0 wt.% relative to the total amount of melamine and urea.

In step a) a slurry is prepared of melamine in a solution of formaldehyde in water. The melamine is a solid and does not dissolve in water and the slurry of melamine in water can be made by stirring in water before or after adding formaldehyde to the water. It is preferred to add the melamine and formaldehyde at low temperature, preferably room temperature, to prevent uncontrolled reaction.

In the slurry in step a) the formaldehyde to melamine molar ratio is preferably less than 3, preferably less than 2.5 and more preferably less than 2. This ratio must be sufficiently low to avoid turbidity in the process caused by formation of poorly soluble tetra-methylolated melamine. Typically, the ration is above 1, preferably 1.2, more preferably above 1.5. In the slurry in step a) the formaldehyde F and melamine M have a F/M weight ratio between 0.3 - 0.5, preferably 0.35 - 0.4.

The total amount of formaldehyde and melamine in the slurry in step a) relative to the total amount of formaldehyde and melamine and water is preferably between 40 - 80 wt.%, preferably between 50 and 70 wt.%, more preferably between 55 and 65 wt.%, most preferably between 55 and 60 wt.%. A too high total amount of M and F may cause early turbidity by precipitation of condensed MF resin, certainly when also the degree of condensation of the resin in step e) is high. A too low amount is not interesting for practical and commercial reasons. The amount also depends on the envisaged use of the resin composition.

In the process according to the invention it is preferred that one or more extenders are added. Extenders are added to adjust properties of the (cured) MF resin and/or simply as filler to reduce cost. Preferably, extenders are added to reduce brittleness of the MF resin and to reduce the cost. Such extenders are also referred to as flexibilisers. Extenders that do not or not substantially react with the M or the F or the formed MF resin are called "external flexibilisers". An advantage of external flexibilisers is that simple inexpensive extenders can be used that do not complicate the process and in view of maintaining the properties of the MF resin. However, co-reactive extenders such as NH-containing flexibilisers can also be used. These are called "internal flexibilisers ".

The one or more extenders are preferably one or more polyols, preferably selected from the group consisting of mono-, oligo- or polysaccharides and aliphatic polyols, more preferably selected from the group of sugars, diols, triols, and most preferably selected from the group consisting of sucrose, DEG and glycerol. Good results were obtained when the one or more extenders comprise both a sugar and a diol. At the pH and temperature conditions specified above, the hydroxy functional extenders such as sugar (i.e. sucrose), sorbitol, 1,4-butanediol, MEG, DEG, PEGs etc. do not substantially react with the M or F or MF resin (external extenders).

Suitable Co-reactive (internal) extenders are o,p-toluene sulfonamide, e-caprolactam, acetoguanamine, or dicyandiamide which can react with formaldehyde or methyol-groups of the MF resin. They are covalently bonded into the resin matrix. The internal flexibilisers are not counted in the F/M molar ratio specified herein. The amount of the one or more extenders is preferably between 5 and 35 wt.% relative to the total weight of melamine, formaldehyde and extender and preferably between 10 and 25 wt.%, more preferably between 15 and 20 wt.%.

The flexibilisers are preferably dissolved in the solution of formaldehyde in water in step a), but can also be added at a later stage, e.g. after melamine addition or at the end of the resin synthesis prior to adjustment of final pH and solids in steps f) and g).

Internal co-reactive flexibilisers can also be added in steps a) - g) but are most preferably added before c) in step a) or b) . Alternatively, the internal flexibilisers can be added just before or during step e) or in separate additions comprising one addition before step c) in step a) or b) and one addition after step c), for example just before or during step e). In the latter case (more additions in separate steps) a part of the internal flexibilizer will be methylolated and ready to be bonded into the growing MF resin network, while the other later added part is reacted into the resin network during a later heating step in the use of the resin composition, for example in an impregnation, drying or pressing process. Ultimately, an internal flexibilizer even be added almost shortly before the resin composition's use and reacted with the MF resin network when heating in the application of the MF resin composition.

A low amount of Urea can optionally be added in anyone of steps a) to d) but it is preferred that the amount of urea is less than 10 wt.%, preferably less than 5 and most preferably 0 wt.% relative to the total amount of melamine and urea. Too high amounts of urea would cause synthesis and resin stability problems. Further, UF resins have the disadvantage of being water soluble and susceptible against hydrolysis resulting in that the superior surface properties provided by the MF resin are negatively affected, in particular water resistance. If it is added then preferably after the reaction of M and F in step c), more preferably after step d).

For a controlled reaction between melamine and formaldehyde the pH is preferably between 8.3 and 10.5. A too high pH above 10.5 will result in too fast reaction which may result in a yellowish resin and there is a risk of turbidity because the resin is quickly over-condensed. The too high pH might also result in a short-lived resin, i.e. a too short shelf life of the resulting resin end-product, even when the final condensation degree seems to be right as a result of a wrong ratio of methylene-ether-bridged and methylene-bridged di- and trimelamine species which have different building ratios at different pH levels. At too low pH levels we also have a very fast reaction which also leads to a short- lived resin and the condensation might happen so fast that the melamine isn`t dissolved completely, and the resulting final resin has an unacceptable turbidity or opacity.

Because formaldehyde is slightly acidic the pH of the slurry is typically adjusted (in step b) in the range between 8.3 and 10.5 after addition of the melamine and formaldehyde to the water. Preferably the pH range is between 9.0 and 9.7 and more preferably between 9.3 and 9.5. The pH is adjusted by adding a base, preferably a base dissolved in water. For higher pH levels it is preferred to adding NaOH or KOH solution in water. Other suitable bases for lower pH levels are soda ash (Na₂CO₃) and amines like dimethylaminopropylamine, methyldiethanolamine, diethanolamine, triethylamine, triethanolamine and the like.

In step c) the melamine and the formaldehyde are reacted in the slurry to form methylolated melamine at a first temperature between 90 and 120°C, preferably between 95 and 110°C and more preferably between 99 and 105°C and most preferably under reflux in atmospheric pressure. As it is preferred to add the melamine and formaldehyde at room temperature the slurry is then heated to the first reaction temperature. A too high first temperature has the risk of too far condensation and precipitation of the MF resin causing turbidity of the resin composition. A too low first temperature has the disadvantage of a too slow dissolution of melamine which yields in a turbid and short-lived resin and a high level of unreacted and thus remaining free melamine. Preferably, the entire process is carried out in atmospheric pressure.

The methylolated melamine formed in step c) is water soluble and at some point, the slurry becomes a water-clear solution. In step d) when the slurry has become a water-clear solution (a solution of methylolated melamine), the solution is cooled to a second temperature between 70, 75, 80 and 90°C, preferably between 80 and 87°C, most preferably between 81 and 85°C and held at the second temperature for condensation of the methylolated melamine forming a melamine formaldehyde resin composition.

The condensation in step c) is preferably done until a pre-defined set water dilutability is reached, wherein water dilutability is expressed as the ratio of the amount of the melamine formaldehyde resin composition to the amount of added water where turbidity starts to occur. The MF resin has a negative dissolution coefficient, meaning that the MF resin precipitates when sufficient water is added. Highly condensed MF resin has a low water dilutability and lightly condensed MF resin has a high water dilutability. Turbidity is the occurrence of a milky haze caused by precipitating or phase separation of the resin particles in the water, which is visually observed. The water dilutability is expressed as the ratio of the amount of the melamine formaldehyde resin composition to the amount of added water where turbidity starts to occur. For example, water miscibility of 1:1.2 means that turbidity occurs when 1.2 grams of water are added to 1 gram of resin. The measurement method is described below in the experimental section.

The condensation in step e) is done for a time to reach a defined set water dilutability between 1:0.5 and 1:2, preferably between 1:0.8 and 1:1.8 and more preferably between 1:1 and 1:1.5, most preferably 1:1.1 and 1 :1.3. A water dilutability between 1:1.1 and 1:1.3 is most preferred the MF resin is very storage stable. Higher and lower water dilutability may cause reduced storage stabilities. Too high water dilutability above 2 would also mean that the resin has a very high solids content which would be too viscous. It is preferred that the condensation step g) is done until a low second water dilutability is reached below 1:1.5, preferably below 1:1.3, more preferably below 1:1.1. A lower water dilutability means that not much water can be added before turbidity occurs. The reason for this is that the stability (also named shelf live or storage stability) is higher when the second water dilutability is lower: water suppresses condensation during storage. When the preferred end water dilutability for the envisaged end-use is higher than the second water dilutability it is necessary to remove water to increase solids content and water dilutability. Suitably, the end water dilutability is higher than the second water dilutability by an increase in water dilutability of 0.1 - 0.4 water parts per 1 part of the MF resin composition. For example, the second water dilutability (prior to distillation) is 1:0.8 - 1.1 and after distillation is 1:1.0 - 1.4. When the set water dilutability is reached, the MF resin composition is cooled preferably to room temperature or lower to prevent further condensation. The desired end-water dilutability depends on the envisaged use of the MF resin. For example, the use of the MF resin composition as adhesive in paper impregnation has preferred water dilutability of about 1.2.

Optionally, the solids content (wt.%) is adjusted by adding or removing water. The solids content is the amount of non-volatile components that remain after drying as described below. In case extenders are added, the amount of extenders adds to the total solids content. The solids content wt.% can be increased by evaporating water, preferably by vacuum distillation at lower temperatures below 70, preferably below 65 °C to prevent further condensation, preferably at a temperature around 60 °C and a pressure between 180-200 mbar vacuum, wherein the solids content is between 40 - 80 wt.%, preferably between 50 and 70 wt.%, more preferably between 55 and 65 wt.%, most preferably between 55 and 60 wt.%. The solids content is defined and measured as described below in the experimental section. The desired solids content depends on the envisaged use. For example, lower solids content is required for paper impregnation applications and higher solids content is required for coatings application.

It is noted that within the first or second temperature range one or more different temperature levels can be chosen, but for practical convenience a single temperature level is preferred. Heating or cooling between room temperature and the first or second temperature is preferably done in by continuously heating or cooling and preferably in a short time tₕ compared to the reaction times tᵣ (tₕ/tᵣ < 0.5 or 0.1).

The invention also relates to a melamine-formaldehyde resin composition obtainable by the process of the invention described above having a residual (free) melamine content below 3, preferably below 2, more preferably below 1 wt.%. Residual melamine here means melamine present as unreacted melamine in the MF resin composition obtained at the end of the process measured as described below.

The resin solution is very stable and can be stored for relatively long time. When the resin solution is stored too long turbidity starts to occur. The storage stability of the MF resin. i.e. the time until which visual turbidity can be observed, is more than 2 weeks, preferably more than 3 weeks and even more preferably at least 4 weeks. A typical storage stability is about 5 weeks at 30 °C and about 2-3 weeks at 20 °C.

A curing agent must be added to crosslink the MF resin composition shortly before application to cure and harden the MF resin. The invention thus also relates to a curable melamine-formaldehyde resin composition comprising the melamine-formaldehyde resin composition according to the invention and a curing catalyst. Suitable MF curing catalyst are known in the art. Suitable curing catalysts are quaternary ammonium compound with an organic acid, ammonium chloride, ammonium sulfate and ammonium hydrogen sulfate. The organic acid can be a mix of two or three different organic acids. Preferably the curing catalyst is a solution of a quaternary ammonium compound with an organic acid.

The MF resin composition of the invention is very suitable for impregnating paper or as a binder for wood fibers The MF resin molecules in the composition are small enough to penetrate into decor paper to expel the air contained in the paper layer to a very high extent, preferably at least 80, 90 or even close to 100 % and preferably also a layer of resin is on the paper surfaces (the decor print side and preferably also backside).

The (curable) MF resin composition has strong adhesive properties and is also very suitable as binder in fiber products (wood fiber products like MDF or veneers). Once fully cured it's very stable against heat, chemicals, water, steam etc.

The curable melamine-formaldehyde (MF) resin composition can be cured by heating in a temperature range between 90 and 220 °C. Preferably, when making laminates by impregnating a paper layer and pressing the impregnated paper layer on a substrate, curing takes place in two steps a) during impregnation in a temperature range between 90 and 160°C, preferably 95 - 150°C and most preferably between 100 and 140°C.; and b) during pressing: at temperatures from 125 - 220°C, preferably 145-210°C and most preferably 175-205°C. The first curing step during the impregnation yields a partially (semi-) cured MF, wherein the resin is changed from the resin`s a-stage to its b-stage, in which the partially cured MF resin still melts and flows to provide self-adhering properties of the MF impregnated papers) and the final step in the press the MF resin is further cured (semi-cured to fully cured, b-stage to c-stage) to a three-dimensional MF resin network.

The invention thus also relates to the use of the adhesive melamine-formaldehyde resin of the invention as impregnation resin for impregnating a porous substrate, preferably paper, or as a binder for the manufacture of wood fiber articles (for example fiber boards such as MDF, HDF) or as an adhesive.

The invention also relates to an impregnated paper layer comprising the paper layer impregnated with the adhesive melamine-formaldehyde resin that is partially cured (as a prepreg) or fully cured, to a laminate comprising a substrate, preferably a wood-based substrate, and laminated thereto the fully cured impregnated paper layer. The substrate is for example a panel, plank, board or shelf, preferably with flat upper and lower surfaces, which can be laminated on one or both sides. Preferably, the substrate is laminated on both sides to avoid warping of the surfaced panels after pressing, preferably with MF resin impregnated papers of the invention on both sides. Optionally, the substrate is laminated on only one side, preferably the front side in use, with the MF resin impregnated papers of the invention and any other resin impregnated paper on the other side, preferably the backside.

The invention also relates to a wood fiber product comprising wood fibers bonded with a binder comprising the adhesive melamine-formaldehyde resin of the invention that is fully cured.

Thus, the invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention. The invention is further illustrated by the following examples.

### Analysis methods

### Analysis of the residual Melamine content

Sample preparation for refractive index (RI) detector method: 350 mg sample of the MF resin composition is analytically weighed into a 50 ml volumetric flask and filled with eluent to the 50 ml mark. The eluent is 920 g acetonitrile, 80 g water and 100 µl ammonia (25 % NH₃ in water). The solution is treated in an ultrasonic bath for 10 minutes and then filtered into a vial via a syringe filter.

Sample preparation for the UV detector method: 20 mg sample of the MF resin composition is added to 100 ml of the eluent. The solution is treated in an ultrasonic bath for 10 minutes and then filtered into a vial via a syringe filter.

The quantification of the content of free Melamine is done by HPLC using Column Adsorbosphere NH2 5µ 250 mm*4.6 mm with the above-described eluent in isocratic mode with 1 ml/min using a RI detector or a UV (205 nm) detector. When using the RI detector, the injection volume is 100 µl and the oven temperature is 25 °C. When using the UV detector, the injection volume is 20 µl and the oven temperature is 40 °C. The amounts of free melamine are indeed evaluated against a calibration curve.

### Analysis of the water miscibility

A sample of 20.00 g of the MF resin composition is placed in an Erlenmeyer-flask. The temperature of the sample is 20°C. From a graduated burette, deionized water (20°C) is titrated to the sample. When the sample becomes turbid the endpoint is reached. The water miscibility (also called water tolerance) is the amount in of water / amount resin composition (gr/gr).

### Analysis of the solids content

The solids content is determined by an oven drying process according to DIN EN ISO 3251 wherein 1g of resin composition is placed in a dish according to DIN 12605 (diameter 35 mm) and dried for 2h at 120°C. The solids content includes the MF resin and the extenders. Extenders are non-volatile and add to solids wt%

### Examples

General preparation method of the examples of the invention: 783 g Formalin 37 % (37 wt.% formaldehyde solution in water) and 207 g water are filled in a 2 I round bottom flask. Then, optional extenders are added to the flask and dissolved under stirring. Thereafter, the pH of the mix is adjusted to pH 9.3 - 9.5 by adding caustic (14 wt.% NaOH solution in water). Then 710 g Melamine (solid) are added to the flask forming a slurry, which is heated to reflux (refluxing temperature of about 100 °C). The molar ratio F/M is 1.73.

As soon as the slurry is water-clear (i.e. no turbidity is visually observed), the resin is cooled to 83 °C and condensed at this temperature till a water miscibility of 1:1.2 is achieved. Thereafter, the resin is cooled to ambient temperature. The content of residual Melamine is determined as described above.

### Example 1:

The general preparation method was carried out wherein as extenders 120 g sucrose and then 90 g DEG are added and dissolved. The content of residual Melamine is 0.7 %.

### Example 2:

The general preparation method was carried out wherein no extenders were added. The content of residual Melamine is 0.8 %.

### Comparative Examples CE3 - CE6:

The general preparation method of the comparative examples differs from the general preparation method of the examples of the invention in that the resin is not cooled to 83°C when the slurry has become water-clear and is not condensed at that lower temperature to a water miscibility of 1:1.2 is achieved. The condensation conditions in the comparative examples are described below.

### Comparative Example CE3:

The general comparative preparation method was carried out wherein as extenders 120 g sucrose and then 90 g DEG is added and dissolved. The resin is condensed at the reflux temperature till a water miscibility of 1:1.2 is achieved. The content of residual Melamine is 4.2 %.

### Comparative Example CE4:

The preparation was carried out as in CE3 except that the resin is condensed at reflux temperature till a water miscibility of 1:5 is achieved. Then the resin is cooled to 93 °C and condensed till a water miscibility of 1:1.2 is achieved. The content of residual Melamine is 4.2 %.

### Comparative Example CE5:

The preparation was carried out as in CE3 except that the slurry is heated to reflux and as soon as the slurry is water-clear, the resin is cooled to 93 °C and condensed at this temperature till a water miscibility of 1:1.2 is achieved. The content of residual Melamine is 4.1 %.

### Comparative Example CE6:

The preparation was carried out as in CE3 except that the slurry is heated to 93 °C and the temperature is kept at 93 °C and condensed till a water miscibility of 1:1.2 is achieved. The content of residual Melamine is 3.8 %.

### MF resin impregnated paper sheet examples.

### Preparation of the impregnation resin

The resins from Examples 1 and 2 and from comparative Examples CE3 - CE6 as well as commercially available MF impregnation resins (Metadynea Austria GmbH: Primere 70 0562L, and Primere 70 0862L) were diluted with demineralised water to a solids content of 52 wt.%.

An impregnation resin was prepared from the above resin composition by adding 0.3 % PAT 959/XP and 0.1 % PAT 523/XP (wetting agent and release agent from company Würtz GmbH & Co KG) and latent curing catalyst Primere 70 9160L (Metadynea Austria GmbH).

The amount of the latent curing catalyst (hardener) was chosen such that the impregnation resin has a turbidity time of 3 - 3.5 minutes when heated at 100°C. The turbidity time is the time lapsed between start of the curing reaction at 100°C and the occurrence of turbidity and is determined as follows.
1. In a 400 ml beaker 300 g of resin composition were mixed / diluted with demineralised or distilled water with water with a glass rod to a homogeneous solution having a solids content of 52 wt.%.
2. Then an amount of hardener Primere 70 9160L (solution of a quaternary ammonium compound with an organic acid) was added to the resin composition using an Air Interface Pipette. The solution was mixed to a homogeneous solution with a glass rod. The temperature is room temperature (21°C) such that no substantial curing occurs.
3. 10 g ± 0.1 g of that solution were placed in a 160 x 16 mm test tube (Height x diameter).
4. The test tube was dipped into a 600 ml beaker glass which contains 500 ml of boiling water (100°C).
5. With a glass rod (diameter 4.8 - 5.2 mm) the solution in the test tube was stirred for exactly 30 sec. The formation of bubbles was avoided.
6. The glass rod remained in the test tube, the test tube was heated without stirring.
7. The time lapsed between dipping the test tube in boiling water and the time that the test mixture shows turbidity (became white) is the turbidity time.
8. The amount of hardener was adjusted in one or more of the above turbidity tests to find the required amount of curing catalyst that results in the required turbidity time between of 3 - 3.5 minutes.

### Preparation of impregnated paper sheets

Commercially available A4 sized décor paper (70 gsm Oxford Cherry of Süddekor) was impregnated with the impregnation resin. Target settings for impregnation were resin pick up of approximately 120 wt.% and volatile contents of 6 - 6.5 %. The resin pick up in wt.% is calculated as follows: ((m2 - m1)/m1)*100 [%], in which m2 = paper weight after impregnation (B stage resin) and m1 = paperweight before impregnation (décor paper).

The volatile content in wt.% is calculated as follows: ((m2 - m3)/m2) *100 [%], in which m2 = weight of the impregnated paper (before drying in a thermostat), m3 = weight of the impregnated paper after drying in a thermostat at 160 °C for 5 min (C stage resin).

These impregnates were pressed onto commercially available high density fiberboard (HDF) of 7 mm thickness, applying 180 °C and 30 bar specific pressure for 30 seconds to form a laminate. The surface properties of the cured impregnated paper on the laminate (the décor side of the laminate) have been tested according to test methods that a typical in the technical field; the water steam test, Rhodamin B test, and crack resistance test.

The water steam test was performed according to EN 438-2 (paragraph 14) wherein 100 x 100 mm laminate samples were placed on top of a 250 ml Erlenmeyer flask filled with 200 ml boiling water (with the décor side towards the water steam). The laminate panel was pressed to the flask with a 500 g weight. The samples were exposed to the water steam for 1 hour and the laminate panel pressed with a 500 g weight). Thereafter, the samples were removed from the water steam, remaining water was carefully wiped off, and the samples were stored for 24 h followed by visual inspection. For judgment the scale given in EN 438-2 (paragraph 14) was used (the scale of surface appearance runs from 1 to 5, wherein 5 is best: no visible change of the surface and 1 is the worst: strong surface rupture and/or delamination).

For the Rhodamin B test, a test solution was prepared dissolving 0.2 g Rhodamin B in 1000 ml 2 M hydrochloric acid. On the décor side of the board sample a 50 mm wide watch glass having a 10 mm hole was placed with the wider side down. Through the hole the watch glass was filled with the test solution and kept on the décor surface for 1 hour. Thereafter, the watch glass was removed; the acid washed off with distilled water, remaining water was carefully wiped off. The assessment of the surface appearance was done by visual inspection and judged according to the following scale: 0: No coloring, 1: Weak coloring, 2: Moderate coloring, 3: Strong coloring, 4: Strong coloring and limited swelling, 5: Strong coloring and strong swelling.

For the crack resistance test 200 x 200 mm panel samples are used. In this case, the edges are carefully sanded to prevent existing hairline cracks caused by cutting. The test specimen is then clamped in a suitable holder and stored for 20+/-1 hour in a drying oven with circulating air at a temperature of 80°C. Thereafter, the test specimen is cooled at ambient temperature for 3 hours. This is followed by the visual assessment and judged by the following scale: 5: surfaces and edges are as in the initial state, 4: surfaces unchanged, with minor edge hairline cracks visible to the naked eye, 3: surface cracks visible to the naked eye and/or moderate edge cracks, 2: moderate surface cracks and/or severe edge cracks, 1: severe surface cracks and/or delamination.

The results of the above described tests are summarised in Table 1.

**Table 1**

| Sample | Free melamine [%] | resin pick-up [%] | volatile content [%] | water steam test | Rhodamin B test | crack resistance |
|---|---|---|---|---|---|---|
| Example 1 | 0.7 | 120.2 | 6.3 | 5 | 0 | 5 |
| Example 2 | 0.8 | 119.8 | 6.1 | 4 | 0 | 5 |
| Comp Example 3 | 4.2 | 120.8 | 6.4 | 4 | 1 | 4 |
| Comp Example 4 | 4.2 | 119.7 | 6.2 | 5 | 0 | 4 |
| Comp Example 5 | 4.1 | 120.1 | 6.3 | 5 | 0 | 5 |
| Comp Example 6 | 3.8 | 120.6 | 6.4 | 5 | 0 | 2 |
| Primere 70 0562L | 3.8 | 119.6 | 6.2 | 5 | 0 | 5 |
| Primere 70 0862L | 3.8 | 119.0 | 6.2 | 4 | 1 | 4 |

The results in Table 1 show that the resin composition according to the invention has low free melamine content and shows very good surface properties in application as impregnation resin in impregnated paper sheet for laminating on HDF.

## Claims

1. A process for the preparation of a melamine-formaldehyde resin composition comprising the steps of:
a. Preparing a slurry of melamine in a solution of formaldehyde in water,
b. adjusting pH of the slurry in a range between 8.3 and 10.5, preferably between 9.0 and 9.7, more preferably between 9.3 and 9.5, preferably by adding NaOH solution in water,
c. Reacting the melamine and the formaldehyde in the slurry to form methylolated melamine at a first temperature between 90 and 120°C, preferably between 95 and 110°C and more preferably between 99 and 105°C and most preferably under reflux in atmospheric pressure,
d. when the slurry has become a water-clear solution, cooling to a second temperature between 70, 75, 80 and 90°C, preferably between 80 and 87°C, most preferably between 81 and 85°C and holding at that second temperature for condensation of the methylolated melamine forming a melamine formaldehyde resin composition,
e. cooling,
f. optionally adjusting a solids content, by adding water or evaporating water before or after the cooling
g. optionally adding urea in any of steps a) to d) in an amount less than 10, preferably less than 5 and most preferably 0 wt.% relative to the total amount of melamine and urea.

2. The process according to claim 1, wherein the melamine-formaldehyde resin composition has a residual (free) melamine content below 3, preferably below 2, more preferably below 1 wt.%.

3. The process according to claims 1 or 2, wherein in the slurry in step a) the formaldehyde to melamine molar ratio is less than 3 (sufficiently low to avoid turbidity in the process caused by poorly soluble tetramethylolated melamine and typically above 1, preferably 1.2, more preferably above 1.5)

4. The process according to anyone of claims 1 to 3, wherein in the slurry in step a) the formaldehyde F and melamine M have a F/M weight ratio between 0.3 - 0.5, preferably 0.35 - 0.4.

5. The process according to anyone of claims 1 to 4, wherein the slurry in step a) comprises a total amount of formaldehyde and melamine relative to the total amount of formaldehyde and melamine and water between 40 - 80 wt.%, preferably between 50 and 70 wt.%, more preferably between 55 and 65 wt.%, most preferably between 55 and 60 wt.%.

6. The process according to anyone of claims 1 to 5, wherein one or more extenders are added and dissolved in one or more of the steps a) to g), but preferably in the solution of formaldehyde in water in step a).

7. The process according to claim 6, wherein the one or more extenders are one or more polyols, preferably selected from the group consisting of mono-, oligo- or polysaccharides and aliphatic polyols, more preferably selected from the group of sugars, diols, triols, and most preferably selected from the group consisting of sucrose, DEG and glycerol.

8. The process according to claims 6 or 7, wherein the one or more extenders comprise both a sugar and a diol.

9. The process according to claims 6 to 8, wherein the amount of extenders is between 5 and 35 wt.% relative to the total weight of melamine, formaldehyde and extender and preferably between 10 and 25 wt.%, more preferably between 15 and 20 wt.%.

10. The process according to anyone of claims 1 to 9, wherein the condensation in step e) is done for a time to reach a set water dilutability, expressed as the ratio of the amount of the resin composition to the amount of added water where turbidity starts to occur, wherein preferably the water dilutability is between 1:0.5 and 1:2, preferably between 1:0.8 and 1:1.8 and more preferably between 1:1 and 1:1.5, most preferably 1:1.1 and 1:1.3.

11. The process according to anyone of claims 1 to 10, wherein the second water dilutability is between 1:0.5 and 1:1.5 for storage stability and for an envisaged end-use water is removed from the MF resin composition increasing the water dilutability preferably by 0.1 to 0.5 parts of water per part of MF resin composition.

12. The process according to anyone of claims 1 to 11, wherein the solids content is adjusted by adding or removing water, wherein removing water is preferably done by evaporating water, preferably by vacuum distillation which is preferably done at a temperature around 60 °C and a pressure between 180-200 mbar vacuum, wherein the solids content is between 40 - 80 wt.%, preferably between 50 and 70 wt.%, more preferably between 55 and 65 wt.%, most preferably between 55 and 60 wt.%.

13. A melamine-formaldehyde resin composition obtainable by the process of anyone of claims 1 - 12 having a residual (free) melamine content below 3, preferably below 2, more preferably below 1 wt.%.

14. An curable melamine-formaldehyde resin composition comprising the melamine-formaldehyde resin composition according to claim 13 and a curing catalyst, preferably a solution of a quaternary ammonium compound with an organic acid.

15. Use of the curable melamine-formaldehyde resin of claim 14 as impregnation resin for impregnating paper or as a binder for wood fiber articles.

16. An impregnated paper layer comprising a paper layer impregnated with the curable melamine-formaldehyde resin of claim 14 that is uncured, partially cured or fully cured.

17. A laminate comprising a substrate, preferably a wood-based substrate, and laminated thereto a fully cured impregnated paper layer according to claim 16.

18. A wood fiber product comprising wood fibers bonded with a binder comprising the curable melamine-formaldehyde resin of claim 14 that is fully cured.
